# EUROPEAN PATENT APPLICATION

(11) **EP 4 530 046 A1**
(43) Date of publication of application: **02.04.2025**
(21) Application number: 23831941.2
(22) Date of filing: 29.06.2023
(51) Int. Cl.: B29C 65/00, H01M 50/105, B29L 31/00

(54) **SECONDARY BATTERY MANUFACTURING APPARATUS AND MANUFACTURING METHOD**

(30) Priority: 01.07.2022 KR 20220081503
(71) Applicant: LG Energy Solution, Ltd., Seoul 07335 (KR)
(72) Inventor: LEE, Min Jae, Daejeon 34122 (KR)
(74) Representative: Plasseraud IP
(86) International application number: PCT/KR2023/009183
(87) International publication number: WO 2024/005583

(57) **Abstract**

An apparatus for manufacturing a secondary battery according to an embodiment of the present invention may include a transfer module configured to transfer a pouch, a heating module comprising at least one of an internal heating part provided in the transfer module to heat the pouch and an external heating part disposed outside the transfer module to heat the pouch, and a sealing module disposed behind the heating module in a transfer direction of the pouch to seal a terrace part of the pouch in a state in which the pouch is folded so that an electrode assembly is accommodated in a cup part of the pouch.

## Description

### TECHNICAL FIELD

The present application claims the benefit of the priority of Korean Patent Application No. 10-2022-0081503, filed on July 1, 2022, which is hereby incorporated by reference in its entirety.

The present includes relates to an apparatus and method for manufacturing a secondary battery.

### BACKGROUND ART

In general, secondary batteries include nickelcadmium batteries, nickel-hydrogen batteries, lithium ion batteries, and lithium ion polymer batteries. Such a secondary battery is being applied to be used in small-sized products such as digital cameras, P-DVDs, MP3Ps, mobile phones, PDAs, portable game devices, power tools, E-bikes, and the like as well as large-sized products requiring high power such as electric vehicles and hybrid vehicles, power storage devices for storing surplus power or renewable energy, and backup power storage devices.

In general, in order to manufacture the secondary battery, first, electrode active material slurry is applied to a positive electrode collector and a negative electrode collector to manufacture a positive electrode and a negative electrode. Then, the electrodes are stacked on both sides of a separator to form an electrode assembly. Also, the electrode assembly is accommodated in a battery case, and then the battery case is sealed after an electrolyte is injected therein.

Such a secondary battery is classified into a pouch-type secondary battery and a can-type secondary battery according to a material of a case accommodating the electrode assembly. In the pouch-type secondary battery, an electrode assembly is accommodated in a pouch made of a flexible polymer material. Also, in the can-type secondary battery, an electrode assembly is accommodated in a case made of a metal or plastic material.

In general, a pouch-type battery case is manufactured by performing press processing on a pouch film having flexibility to form a cup part. In addition, when the cup part is formed, an electrode assembly is accommodated in the cup part, and then, a side of the cup part is sealed to manufacture a secondary battery.

Specifically, in a state in which the electrode assembly is accommodated in the cup part, the pouch may be folded along a folding line to cover the electrode assembly, and the sealing device may thermally fuse a side portion formed along a circumference of the cup part at a high-temperature and high-pressure.

Since a sealing process is performed for a relatively short time, there are cases in which the sealing process is performed without reaching the high-temperature for the thermal fusion. If the sealing process is performed in a state in which sufficient heat is not transferred, sealing strength of the pouch is weakened, resulting in deteriorated yield and quality of secondary batteries. Therefore, for more smooth sealing process, there is a need for an apparatus for manufacturing a secondary battery provided with a device that transfers sufficient heat to the pouch.

### DISCLOSURE OF THE INVENTION

### TECHNICAL PROBLEM

An object of the present invention for solving the above problem is to provide an apparatus for manufacturing a secondary battery, which secures sealing strength of a pouch by preheating the pouch.

### TECHNICAL SOLUTION

An apparatus for manufacturing a secondary battery according to an embodiment of the present invention may include a transfer module configured to transfer a pouch, a heating module comprising at least one of an internal heating part provided in the transfer module to heat the pouch and an external heating part disposed outside the transfer module to heat the pouch, and a sealing module disposed behind the heating module in a transfer direction of the pouch to seal a terrace part of the pouch in a state in which the pouch is folded so that an electrode assembly is accommodated in a cup part of the pouch.

The pouch may be folded along a folding line, and a longitudinal direction of the external heating part may be perpendicular to the folding line.

The external heating part may be provided in pair, which are disposed at both sides of the pouch.

The electrode assembly may include an electrode and a pair of lead tabs bonded to both sides of the electrode, and when viewed from the above, the pair of external heating parts may be disposed to correspond to the pair of lead tabs.

The external heating part may move horizontally.

The external heating part may be disposed in pair at both sides of the pouch, and when viewed from the above, the pair of external heating parts may be separated from both the sides of the pouch.

After the external heating part is separated from the pouch, the pouch may be folded.

The internal heating part may be disposed in the transfer module along the terrace part.

The pouch may be folded along a folding line, and a longitudinal direction of the internal heating part may be perpendicular to the folding line.

A method for manufacturing a secondary battery according to another embodiment of the present invention may include a heating process of heating a pouch by at least one of an external heating part disposed outside a transfer module or an internal heating part provided in the transfer module in a process of transferring the pouch by the transfer module, and a sealing process of the terrace part of the pouch by a sealing module in a state in which the pouch is folded so that an electrode assembly is accommodated in a cup part of the pouch.

The method may further include a folding process of folding the pouch along a folding line.

In the heating process, the external heating part may be disposed to be perpendicular to the folding line and is provided in pair at both sides of the pouch.

The method may further include, before the folding process, a separation process of separating the external heating part to both sides of the pouch when viewed from the above.

In the heating process, the internal heating part may be disposed in the transfer module along the terrace part.

### ADVANTAGEOUS EFFECTS

According to the preferred embodiment of the present invention, the pouch may be preheated to secure the sealing strength of the pouch, thereby improving the quality and yield of the secondary battery.

In addition, the effects that are obvious to those skilled in the art may be predicted from the configurations according to the embodiment of the present invention.

### BRIEF DESCRIPTION OF THE DRAWINGS

The following drawings attached in this specification illustrate a preferred embodiment of the present invention and function to make further understood the technical spirit of the present invention along with the detailed description of the invention, and thus, the present invention should not be construed as being limited to only the drawings.
FIG. 1 is a perspective view illustrating an apparatus for manufacturing a secondary battery according to an embodiment.
FIG. 2 is a perspective view illustrating a state in which an external heating part is disposed.
FIG. 3 is a perspective view illustrating a state in which an electrode assembly is seated, and the external heating part is disposed in the pouch.
FIG. 4 is a perspective view illustrating a state in which the external heating part is separated from the pouch.
FIG. 5 is a perspective view illustrating a configuration of the pouch folded by a folding module.
FIG. 6 is a block diagram illustrating a method for manufacturing a secondary battery according to another embodiment.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

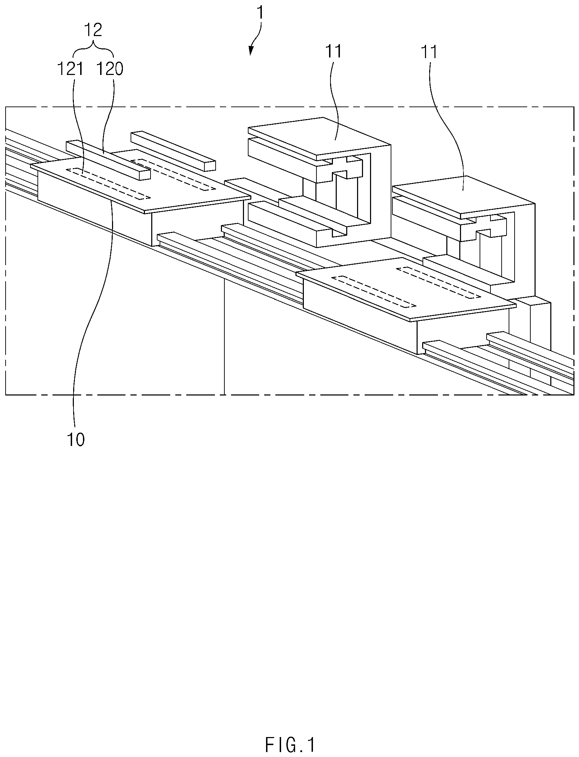

FIG. 1 is a perspective view illustrating an apparatus 1 for manufacturing a secondary battery according to an embodiment.

Referring to FIG. 1, the apparatus for manufacturing the secondary battery may manufacture a secondary battery by accommodating an electrode assembly C into a pouch P to seal the pouch P. For example, the apparatus 1 for manufacturing the secondary battery may mold a cup part U in the pouch P to define an accommodation space and then dispose the electrode assembly C in the cup part U of the pouch P and thermally fuse a side portion of the pouch P at high-temperature and high-pressure to seal the pouch P.

In addition, the apparatus 1 for manufacturing the secondary battery may preheat the pouch P in a process of transferring the pouch P, in which the cup part U is molded, before sealing the pouch P. Specifically, the apparatus 1 for manufacturing the secondary battery may preheat the pouch P when the pouch P in which the cup part U is molded is transported alone and also may preheat the pouch P in a process of seating the electrode assembly C in the cup part U to transfer the pouch P and the electrode assembly C.

As described above, the apparatus 1 for manufacturing the secondary battery may preheat the pouch P before sealing the pouch P, and thus, the apparatus 1 for manufacturing the secondary battery may more secure sealing strength of the pouch P to improve efficiency in manufacturing process and also improve yield and quality of the secondary battery.

The apparatus 1 for manufacturing the secondary battery may include a transfer module 10, a sealing module 11, and a heating module 12.

The transfer module 10 may transfer the pouch P. For example, the transfer module 10 may adsorb and fix the pouch P in a vacuum adsorption manner and then transfer the pouch P. When the transfer module 10 transfers the pouch P in which the cup part U is molded, the electrode assembly C may be seated in the cup part U of the pouch P, and the transfer module 10 may transfer the pouch P and the electrode assembly C again in the state in which the electrode assembly C is seated in the cup part U of the pouch P. Thereafter, the transfer module 10 may transfer the pouch P, in which the electrode assembly C is accommodated, to a folding module 13, which will be described later, and then, the folded pouch P may be transferred to the sealing module 11, which will be described later.

The sealing module 11 may seal the pouch P in the state in which the electrode assembly C is accommodated in the pouch P. For example, the pouch P may be constituted by the recessed cup part U and a terrace part T disposed along a circumference of the cup part U, and the electrode assembly C may be accommodated in the pouch P by folding the pouch P in the state in which the electrode assembly C is seated in the cup part U of the pouch P. Thereafter, the sealing module 11 may seal the pouch P by thermally fusing the terrace part T at a high-temperature and high-pressure.

Specifically, the sealing module 11 may include a sealing block provided at each of upper and lower sides of the folded pouch P and may apply a pressure to each of top and bottom surfaces of the folded pouch P, which is folded by the sealing block, to thermally fuse the pouch P.

The heating module 12 may heat the transported pouch P. For example, the heating module 12 may be provided in the transfer module 10 to apply heat to the pouch P seated in the transfer module 10. In addition, the heating module 12 may be disposed outside the transfer module 10 to apply heat to an outer surface of the pouch P being transferred by the transfer module 10. Specifically, the heating module 12 may include at least one of an external heating part 120 or an internal heating part 121.

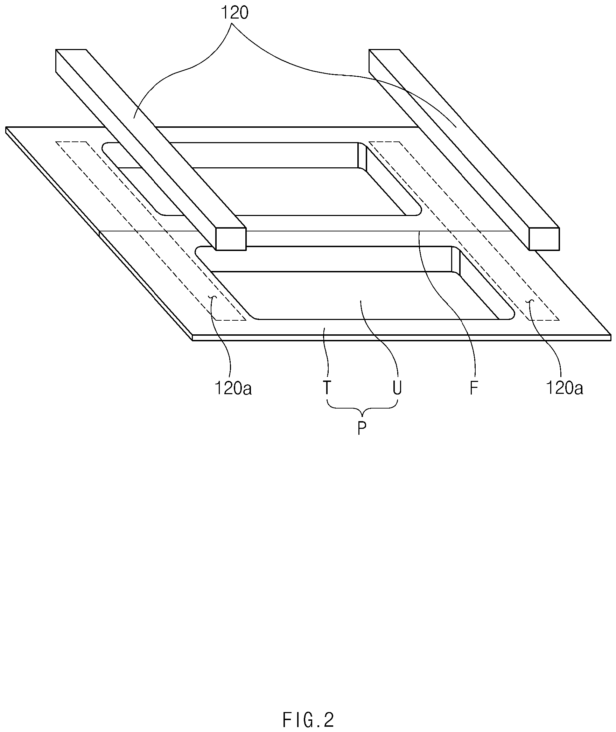

FIG. 2 is a perspective view illustrating a state in which an external heating part 120 is disposed.

Referring to FIG. 2, the external heating part 120 may be disposed outside the transfer module 10 to heat the pouch P. For example, the external heating part 120 may be disposed at the upper side of the pouch P to apply heat toward the pouch P. Specifically, the external heating part 120 may be disposed on a moving path of the pouch P to apply heat toward the pouch P until the pouch P is folded.

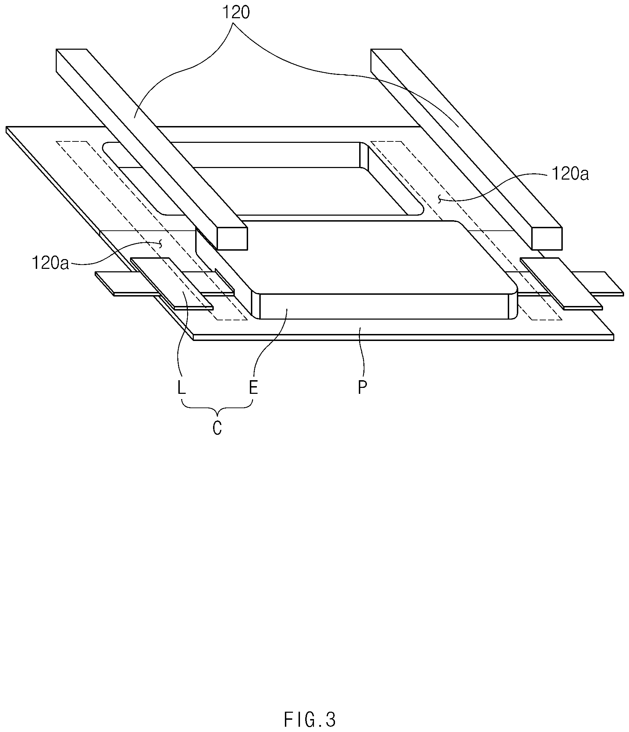

FIG. 3 is a perspective view illustrating a state in which the electrode assembly C is seated, and the external heating part 120 is disposed in the pouch P.

Referring to FIG. 3, the cup part U may be molded at one side with respect to a central folding line F of the pouch P, and then, the pouch P may be folded along the folding line F by the folding module 13, which will be described later, and the external heating part 120 may be disposed to be perpendicular to the folding line F. That is, a longitudinal direction of the external heating part 120 may be perpendicular to the folding line F. In other words, the external heating part 120 may have a bar shape and be disposed to be perpendicular to the folding line F.

In addition, the external heating part 120 may be disposed in pair at both sides of the pouch P. For example, the electrode assembly C may be constituted by an electrode E and a pair of lead tabs L bonded to both sides of the electrode E, and the external heating part 120 may be disposed to correspond to the pair of lead tabs L. Specifically, the electrode assembly C may be seated in one cup part U of the pouch P before folding the pouch P so that a connection line connecting the pair of lead tabs L to each other is parallel to the folding line F. In this case, when viewed from the above, the pair of external heating parts 120 may be disposed to correspond to the pair of lead tabs L.

In other words, the external heating parts 120 may be disposed in pair at the upper side and both the sides of the pouch P so as to be perpendicular to the folding line F, and the electrode assembly C may be seated in the cup part U in the state in which the pair of lead tabs L are disposed in a heating area 120a of the pouch P, which is heated by the pair of external heating parts 120. Here, the heating area 120a may mean a portion of the terrace part T heated by the external heating part 120. In other words, the heating area 120a may be defined on an extension surface of the terrace part T of the external heating part 120, and specifically, the terrace part T may be disposed at each of both sides of the terrace part T in the longitudinal direction perpendicular to the folding line F.

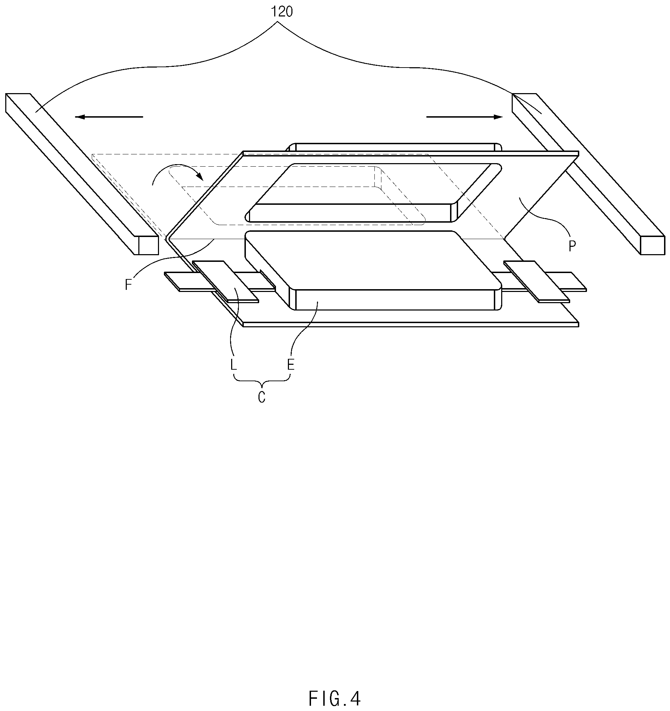

FIG. 4 is a perspective view illustrating a state in which the external heating part 120 is separated from the pouch P.

Referring to FIG. 4, the external heating part 120 may be separated from the pouch P. For example, the external heating part 120 may be separated from both the sides of the pouch P. Specifically, the external heating part 120 may move horizontally in a direction parallel to the folding line F in the state in which the pair of external heating parts 120 are disposed at the upper side of the pouch P and then may be separated from the pouch P as viewed from the above.

More specifically, the external heating part 120 may be separated from the pouch P before the pouch P is folded. That is, after the external heating part 120 applies heat to the pouch P and is separated, the pouch P may be folded. Thus, the external heating part 120 may not be disposed on the folding path of the pouch P to previously prevent the external heating part 120 from interfering and colliding due to the folding operation of the pouch P.

The internal heating part 121 may be provided in the transfer module 10 to heat the pouch P. For example, the internal heating part 121 may be provided inside the transfer module 10 to apply heat to the transfer module 10, and thus, the heat generated in the internal heating part 121 may be transferred to the pouch P through the transfer module 10. However, this is only an example of the internal heating part 121, and the internal heating part 121 may be connected to the transfer module 10 in various forms, such as being attached to the outer surface of the transfer module 10.

The internal heating part 121 may move integrally with the transfer module 10 in a state of being built in the transfer module 10, and the internal heating part 121 may apply heat to the transferred pouch P. The internal heating part 121 may be connected to and disposed in the transfer module 10 in various forms such as a heating wire, a heat pipe, and a block.

The internal heating part 121 may be disposed in the transfer module 10 along the terrace part T of the pouch P. Specifically, when viewed from the top, the internal heating part 121 may be disposed in the transfer module 10 to overlap the terrace part T of the pouch P. That is, like the external heating part 120, the internal heating part 121 may be disposed at both sides of the pouch P so as to be perpendicular to the folding line F when viewed from the above.

The internal heating part 121 may be disposed to overlap the terrace part T of the pouch P in the vertical direction. The internal heating part 121 may face the external heating part 120 with the terrace part T of the pouch P therebetween.

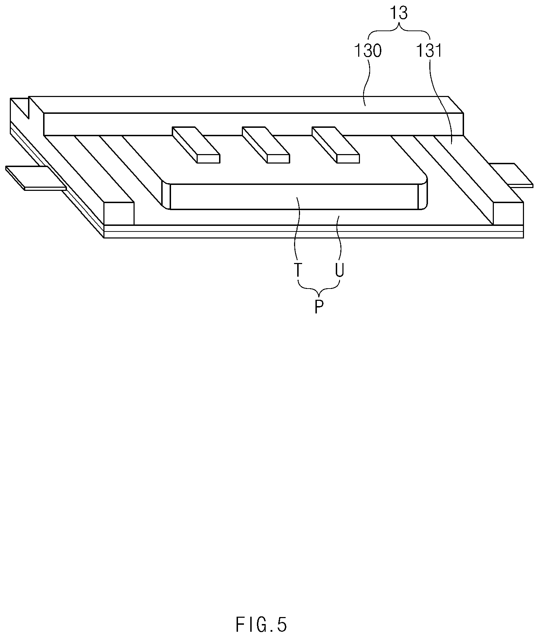

FIG. 5 is a perspective view illustrating a configuration of the pouch P folded by the folding module 13.

Referring to FIG. 5, the apparatus 1 for manufacturing the secondary battery may further include the folding module 13 that folds the pouch P. The folding module 13 may fold the pouch P along the folding line F so that the cup parts U disposed at both the sides of the folding line F are in contact with each other to define the accommodation space. Specifically, the folding module 13 may include a body 130 and a cover part 131.

The body 130 may apply external force to one of the cup parts U disposed at both the sides based on the folding line F of the pouch P so that the pouch P is folded around the folding line F. In other words, the body 130 may apply external force toward one cup part U after being in contact with an outer surface of one cup part U so that the two cup parts U are in contact with each other to define the accommodation space.

The cover part 131 may be connected to both sides of the body 130 to cover the terrace part T of the pouch P. For example, in a state in which a longitudinal direction of the body 130 is disposed parallel to the folding line F, the pair of cover parts 131 may extend from both the sides of the body 130 to one side of the body 130 so as to be perpendicular to the folding line F. That is, the pair of cover parts 131 may cover the terrace part T to cover the heating area 120a.

The heat may be transferred to the terrace part T through the cover part 131, and like the function of the heating module 12, the terrace part T may be preheated before the sealing process.

As a result, since the sealing process of the sealing module 11 is performed for a relatively short time and also be performed without sufficient heat being applied to the pouch P, the heating module 12 and the folding module 13 may be disposed in front of the sealing module 11 with respect to the transfer direction of the pouch P to previously transfer sufficient heat to the pouch P, and thus, the apparatus 1 for manufacturing the secondary battery may secure the sealing strength of the pouch P to improve the quality and yield of the secondary battery.

Hereinafter, a method for manufacturing a secondary battery according to another embodiment is disclosed. Contents duplicated with the configuration and function of the apparatus 1 for manufacturing the secondary battery described above will be omitted below.

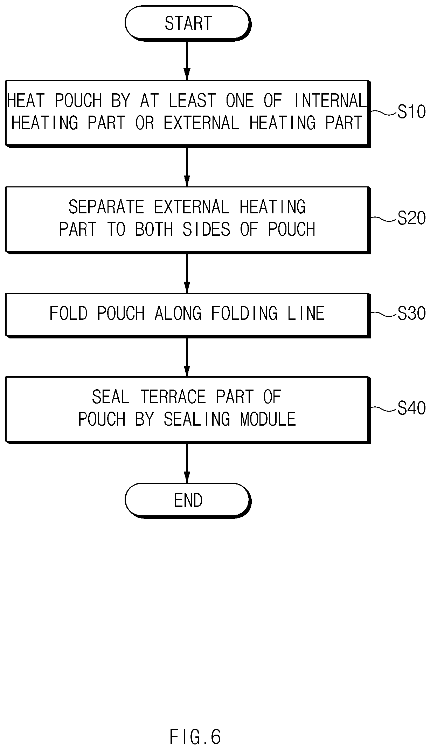

FIG. 6 is a block diagram illustrating a method for manufacturing a secondary battery according to another embodiment.

Referring to FIG. 6, a secondary battery may be manufactured by sealing a pouch P accommodating an electrode assembly C therein through a method for manufacturing the secondary battery. In a process of manufacturing the secondary battery, before sealing the pouch P, the pouch P may be previously preheated to perform a more intensive sealing operation, and as a result, efficiency of the process of manufacturing the secondary battery and yield of the secondary battery may be improved.

The method for manufacturing the secondary battery may include a heating process (S10), a separation process (S20), a folding process (S30), and a sealing process (S40).

In the heating process (S10), at least one of an external heating part 120 or an internal heating part 121 may heat the pouch P transferred by a transfer module 10. Specifically, the external heating part 120 may be disposed outside the transfer module 10 to heat the pouch P. More specifically, cup parts U may be molded at both sides based on a central folding line F of the pouch P, and the pouch P may be folded along the folding line F by the folding module 13. Thus, the external heating part 120 may be disposed to be perpendicular to the folding line F.

In addition, the external heating part 120 may be disposed in pair at both the sides of the pouch P. For example, an electrode assembly C may be constituted by an electrode E and a pair of lead tabs L bonded to both sides of the electrode E, and the external heating part 120 may be disposed to correspond to the pair of lead tabs L.

The internal heating part 121 may be provided in the transfer module 10 to heat the pouch P. The internal heating part 121 may be disposed in the transfer module 10 along the terrace part T of the pouch P. Specifically, when viewed from the top, the internal heating part 121 may be disposed in the transfer module 10 to overlap the terrace part T of the pouch P. The internal heating part 121 may be disposed at both the sides of the pouch P so as to be perpendicular to the folding line F when viewed from the above.

In the separation process (S20), the external heating part 120 may be separated to both the sides of the pouch P when viewed from the top. Specifically, the external heating part 120 may move horizontally in a direction parallel to the folding line F in the state in which the pair of external heating parts 120 are disposed at the upper side of the pouch P and then may be separated from the pouch P as viewed from the above.

In the folding process (S30), the pouch P may be folded along the folding line F by the folding module 13. The folding module 13 may fold the pouch P along the folding line F so that the cup parts U disposed at both the sides of the folding line F are in contact with each other to define the accommodation space.

In the sealing process (S40), the sealing module 11 may seal the terrace part T of the pouch P in a state in which the pouch P is folded so that the electrode assembly C is accommodated in the cup part U of the pouch P. In other words, the sealing module 11 may seal the pouch P by thermally fusing the terrace part T at a high-temperature and high-pressure.

The above-disclosed subject matter is to be considered illustrative, and not restrictive, and the appended claims are intended to cover all such modifications, enhancements, and other embodiments, which fall within the true spirit and scope of the present invention.

Thus, the embodiment of the present invention is to be considered illustrative, and not restrictive, and the technical spirit of the present invention is not limited to the foregoing embodiment.

Therefore, the scope of the present invention is defined not by the detailed description of the invention but by the appended claims, and all differences within the scope will be construed as being included in the present invention.

### [Description of the Symbols]

1: Apparatus for manufacturing secondary battery
10: Transfer module
11: Sealing module
12: Heating module
13: Folding module
120: External heating part
121: Internal heating part
120a: Heating area
130: Body
131: Cover part
S10: Heating process
S20: Separation process
S30: Folding process
S40: Sealing process
P: Pouch
U: Cup part
F: Folding line
F: Folding line
C: Electrode assembly
E: Electrode
L: Lead tab

## Claims

1. An apparatus for manufacturing a secondary battery, the apparatus comprising:
a transfer module configured to transfer a pouch;
a heating module comprising at least one of an internal heating part provided in the transfer module to heat the pouch and an external heating part disposed outside the transfer module to heat the pouch; and
a sealing module disposed behind the heating module in a transfer direction of the pouch to seal a terrace part of the pouch in a state in which the pouch is folded so that an electrode assembly is accommodated in a cup part of the pouch.

2. The apparatus of claim 1, wherein the pouch is folded along a folding line, and
a longitudinal direction of the external heating part is perpendicular to the folding line.

3. The apparatus of claim 2, wherein the external heating part is provided in pair, which are disposed at both sides of the pouch.

4. The apparatus of claim 3, wherein the electrode assembly comprises an electrode and a pair of lead tabs bonded to both sides of the electrode, and
when viewed from the above, the pair of external heating parts are disposed to correspond to the pair of lead tabs.

5. The apparatus of claim 1, wherein the external heating part moves horizontally.

6. The apparatus of claim 5, wherein the external heating part is disposed in pair at both sides of the pouch, and
when viewed from the above, the pair of external heating parts are separated from both the sides of the pouch.

7. The apparatus of claim 6, wherein, after the external heating part is separated from the pouch, the pouch is folded.

8. The apparatus of claim 1, wherein the internal heating part is disposed in the transfer module along the terrace part.

9. The apparatus of claim 8, wherein the pouch is folded along a folding line, and
a longitudinal direction of the internal heating part is perpendicular to the folding line.

10. A method for manufacturing a secondary battery, the method comprising:
a heating process of heating a pouch by at least one of an external heating part disposed outside a transfer module or an internal heating part provided in the transfer module in a process of transferring the pouch by the transfer module; and
a sealing process of the terrace part of the pouch by a sealing module in a state in which the pouch is folded so that an electrode assembly is accommodated in a cup part of the pouch.

11. The method of claim 10, further comprising a folding process of folding the pouch along a folding line.

12. The method of claim 11, wherein, in the heating process, the external heating part is disposed to be perpendicular to the folding line and is provided in pair at both sides of the pouch.

13. The method of claim 11, further comprising, before the folding process, a separation process of separating the external heating part to both sides of the pouch when viewed from the above.

14. The method of claim 10, wherein, in the heating process, the internal heating part is disposed in the transfer module along the terrace part.
